# EUROPEAN PATENT SPECIFICATION

(11) **EP 1 707 582 B1**
(45) Date of publication and mention of the grant of the patent: **20.10.2010**
(21) Application number: 06005575.3
(22) Date of filing: 18.03.2006
(51) Int. Cl.: C08G 18/28, C08G 18/50, C08G 18/78, C08G 18/79, C09D 175/04

(54) **Low suface energy polyisocyanates and their use in one- or two-component coating compositions**
Niedrige Oberflächenenergie aufweisende Polyisocyanate, sowie ihre Verwendung in Einkomponenten- oder Zweikomponenten-Beschichtungszusammensetzungen
Polyisocyanates à faible énergie de surface et leur utilisation dans des compositions de revêtement à un ou à deux composants

(30) Priority: 31.03.2005 US 97438
(43) Date of publication of application: 04.10.2006
(73) Proprietor: Bayer MaterialScience LLC, Pittsburgh, PA 15205 (US)
(72) Inventor: Roesler, Richard R., Wexford PA 15090 (US); Garrett, James T., Gordonsville, VA 22942 (US); Lockhardt, Aaron, Pittsburgh PA 15235 (US); Kinney, Carol L., Eighty Four PA 15330 (US)
(74) Representative: Perchenek, Nils

(56) References cited:
- US-A- 5 576 411
- US-A- 5 747 629

## Description

### Field of the Invention

The present invention is directed to low surface energy polyisocyanates which contain allophanate groups and fluorine, to a process for their preparation by allophanatizing the isocyanate groups of polyisocyanate adducts in the presence of compounds containing hydroxyl groups and fluorine, and to their use in one- and two-component coating compositions.

### Description of the Prior Art

Polyurethane coating compositions containing a polyisocyanate component, in either blocked or unblocked form and an isocyanate-reactive component, generally a high molecular weight polyol, are well known.

Although coatings prepared from these compositions possess many valuable properties, one property, in particular, which needs to be improved is the surface quality. It can be difficult to formulate coating compositions to obtain a coating having a smooth surface as opposed to one containing surface defects such as craters, etc.

It is believed that these difficulties are related to the high surface tension of the two-component coating compositions. Another problem caused by the high surface tension is the difficulty in cleaning the coatings. Regardless of their potential application area, there is a high likelihood that the coatings will be subjected to stains, graffiti, etc.

The incorporation of either fluorine or siloxane groups into polyisocyanates via allophanate groups in order to reduce the surface tension of the polyisocyanates and the surface energy of the resulting polyurethane coatings is disclosed in U.S. Patents 5,541,281; 5,574,122; 5,576,411; 5,646,227; 5,691,439; and 5,747,629. A disadvantage of the polyisocyanates disclosed in these patents is that they are prepared by reacting an excess of monomeric diisocyanates with the compounds containing either fluorine or siloxane groups. After the reaction is terminated the unreacted monomeric diisocyanates must be removed by an expensive thin film distillation process. In addition, it is important to avoid the use of any unnecessary apparatus, such as distillation apparatus, when preparing the low surface energy polyisocyanates because fluorine and the siloxane groups can contaminate the production apparatus requiring extensive cleaning before the apparatus can be used to prepare other products.

Accordingly, it is an object of the present invention to provide coating compositions which have reduced surface tension and, thus, are suitable for the production of coatings which have lower surface energies, improved surfaces and improved cleanability and which also possess the other valuable properties of the known polyurethane coatings. It is an additional object of the present invention to provide polyisocyanates that attain the preceding objective and can be prepared without the need for the expensive and difficult removal of excess, unreacted monomeric diisocyanates.

Surprisingly, these objectives may be achieved with the polyisocyanate mixtures according to the present invention containing allophanate groups and fluorine which are described hereinafter. These polyisocyanate mixtures are prepared from polyisocyanate adducts instead of monomeric diisocyanates. While it would be expected that the use of higher molecular weight and optionally higher functionality polyisocyanate adducts as starting materials would result in insoluble, high viscosity or gel-like products, this is not the case.

### SUMMARY OF THE INVENTION

The present invention is directed to a polyisocyanate mixture
i) having an NCO content of 5 to 35% by weight and a monomeric diisocyanate content of less than 3% by weight, and prepared from a polyisocyanate adduct, which contains isocyanurate, uretdione, biuret, urethane, allophanate, iminooxadiazine dione, carbodiimide, acylurea and/or oxadiazinetrione groups,
ii) containing allophanate groups in an amount such that there are more equivalents of allophanate groups than urethane groups and
iii) containing fluorine (calculated as F, AW 19) in an amount of 0.001 to 50% by weight,
wherein the preceding percentages are based on the solids content of the polyisocyanate mixture and wherein the polyisocyanate mixture is prepared by
a) reacting a portion of the isocyanate groups of the polyisocyanate adduct with 0.01 to 500 millimoles, per mole of polyisocyanate adduct, of a compound containing two or more carbon atoms, one or more hydroxyl groups and one or more fluorine atoms to form urethane groups,
b) adding an allophanatization catalyst prior to, during or after step a),
c) converting a sufficient amount of the urethane groups formed in step a) to allophanate groups to satisfy the requirements of ii) and
d) terminating the allophanatization reaction at the desired NCO content by adding a catalyst poison and/or by thermally deactivating the catalyst and recovering the polyisocyanate mixture without removing monomeric diisocyanates.

The present invention is also directed to a process for the production of a polyisocyanate mixture
i) having an NCO content of 5 to 35% by weight and a monomeric diisocyanate content of less than 3% by weight, and prepared from a polyisocyanate adduct, which contains isocyanurate, uretdione, biuret, urethane, allophanate, iminooxadiazine dione, carbodiimide, acylurea and/or oxadiazinetrione groups,
ii) containing allophanate groups in an amount such that there are more equivalents of allophanate groups than urethane groups and
iii) containing fluorine (calculated as F, AW 19) in an amount of 0.001 to 50% by weight,
wherein the preceding percentages are based on the solids content of the polyisocyanate mixture,
by
a) reacting a portion of the isocyanate groups of a polyisocyanate adduct with 0.01 to 500 millimoles, per mole of polyisocyanate adduct, of a compound containing two or more carbon atoms, one or more hydroxyl groups and one or more fluorine atoms to form urethane groups,
b) adding an allophanatization catalyst prior to, during or after step a),
c) converting a sufficient amount of the urethane groups formed in step a) to allophanate groups to satisfy the requirements of ii) and
d) terminating the allophanatization reaction at the desired NCO content by adding a catalyst poison and/or by thermally deactivating the catalyst and recovering the polyisocyanate mixture without removing monomeric diisocyanates.

The present invention also relates to the use of the polyisocyanate mixture, optionally in blocked form, as an isocyanate component in one- or two-component coating compositions.

### DETAILED DESCRIPTION OF THE INVENTION

In accordance with the present invention the term "(cyclo)aliphatically bound isocyanate groups" means aliphatically and/or cycloaliphatically bound isocyanate groups.

In accordance with the present invention the polyisocyanate mixtures are prepared from polyisocyanate adducts which are prepared from monomeric polyisocyanates and contain isocyanurate, uretdione, biuret, urethane, allophanate, iminooxadiazine dione, carbodiimide, acylurea and/or oxadiazinetrione groups. The polyisocyanate adducts, which preferably have an NCO content of 5 to 30% by weight, include:
1) Isocyanurate group-containing polyisocyanates which may be prepared as set forth in DE-PS 2,616,416, EP-OS 3,765, EP-OS 10,589, EP-OS 47,452, US-PS 4,288,586 and US-PS 4,324,879. The isocyanato-isocyanurates generally have an average NCO functionality of 3 to 4.5 and an NCO content of 5 to 30%, preferably 10 to 25% and most preferably 15 to 25% by weight.
2) Uretdione diisocyanates which may be prepared by oligomerizing a portion of the isocyanate groups of a diisocyanate in the presence of a suitable catalyst, e.g., a trialkyl phosphine catalyst, and which may be used in admixture with other aliphatic and/or cycloaliphatic polyisocyanates, particularly the isocyanurate group-containing polyisocyanates set forth under (1) above.
3) Biuret group-containing polyisocyanates which may be prepared according to the processes disclosed in U.S. Patent Nos. 3,124,605; 3,358,010; 3,644,490; 3,862,973; 3,906,126; 3,903,127; 4,051,165; 4,147,714; or 4,220,749 by using co-reactants such as water, tertiary alcohols, primary and secondary monoamines, and primary and/or secondary diamines. These polyisocyanates preferably have an NCO content of 18 to 22% by weight.
4) Iminooxadiazine dione and optionally isocyanurate group-containing polyisocyanates which may be prepared in the presence of special fluorine-containing catalysts as described in DE-A 19611849. These polyisocyanates generally have an average NCO functionality of 3 to 3.5 and an NCO content of 5 to 30%, preferably 10 to 25% and most preferably 15 to 25% by weight.
5) Carbodiimide group-containing polyisocyanates which may be prepared by oligomerizing di- or polyisocyanates in the presence of known carbodiimidization catalysts as described in DE-PS 1,092,007, US-PS 3,152,162 and DE-OS 2,504,400, 2,537,685 and 2,552,350.
6) Polyisocyanates containing oxadiazinetrione groups and containing the reaction product of two moles of a diisocyanate and one mole of carbon dioxide.

Preferred polyisocyanate adducts are the polyisocyanates containing isocyanurate, uretdione, biuret, and/or iminooxadiazine dione groups, especially polyisocyanate containing isocyanurate groups and optionally uretdione or iminooxadiazine dione groups.

Suitable monomeric diisocyanates for preparing the polyisocyanate adducts include those represented by the formula

R(NCO)₂

in which R represents an organic group obtained by removing the isocyanate groups from an organic diisocyanate having a molecular weight of about 140 to 400. Preferred diisocyanates are those in which R represents a divalent aliphatic hydrocarbon group having 4 to 40, preferably 4 to 18 carbon atoms, a divalent cycloaliphatic hydrocarbon group having 5 to 15 carbon atoms, a divalent araliphatic hydrocarbon group having 7 to 15 carbon atoms or a divalent aromatic hydrocarbon group having 6 to 15 carbon atoms.

Examples of the suitable organic diisocyanates include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis-(4-isocyanatocyclohexyl)-methane, 2,4'-dicyclohexyl-methane diisocyanate, 1,3- and 1,4-bis-(isocyanatomethyl)-cyclohexane, bis-(4-isocyanato-3-methyl-cyclohexyl)-methane, α,α,α',α'-tetramethyl-1,3- and/or -1 ,4-xylylene diisocyanate, 1-isocyanato-1-methyl-4(3)-isocyanatomethyl cyclohexane, 2,4- and/or 2,6-hexahydrotoluylene diisocyanate, 1,3- and/or 1,4-phenylene diisocyanate, 2,4- and/or 2,6-toluylene diisocyanate, 2,4-and/or 4,4'-diphenyl-methane diisocyanate, 1,5-diisocyanato naphthalene and mixtures thereof.

Polyisocyanates containing 3 or more isocyanate groups such as 4-isocyanantomethyl-1,8-octamethylene diisocyanate and aromatic polyisocyanates such as 4,4',4"-triphenytmethane triisocyanate and polyphenyl polymethylene polyisocyanates obtained by phosgenating aniline/formaldehyde condensates may also be used.

Preferred organic diisocyanates include 1,6-hexamethylene diisocyanate, 1-isocyanato-3-isocyanatomethyl-3,5,5-trimethylcyclohexane (isophorone diisocyanate or IPDI), bis-(4-isocyanatocyclohexyl)-methane, α,α,α',α'-tetramethyl-1,3- and/or -1,4-xylylene diisocyanate, 2,4- and/or 2,6-toluylene diisocyanate, and 2,4- and/or 4,4'-diphenylmethane diisocyanate.

In accordance with the present invention urethane groups and preferably allophanate groups are incorporated into the polyisocyanate mixtures by the use of compounds containing two or more carbon atoms, one or more hydroxyl groups (preferably one or two hydroxyl groups, more preferably one) and one or more fluorine atoms (preferably in the form of fluoroalkyl groups such as -CF₂-). Examples of these compounds include aliphatic, cycloaliphatic, araliphatic or aromatic hydroxyl group-containing compounds, which contain two or more carbon atoms and also contain fluorine atoms, preferably fluoroalkyl groups. The compounds may be linear, branched or cyclic and have a molecular weight (number average molecular weight as determined by gel permeation chromatography using polystyrene as standard) of up to 50,000, preferably up to 10,000, more preferably up to 6000 and most preferably up to 2000. These compounds generally have OH numbers of greater than 5, preferably greater than 25 and more preferably greater than 35. The hydroxyl group-containing compounds may optionally contain other hetero atoms in the form of, e.g., ether groups, ester groups, carbonate groups, acrylic groups, etc.

Thus, it is possible in accordance with the present invention to use the known polyols from polyurethane chemistry, provided that they contain fluorine, e.g. by using fluorine-containing alcohols, acids, unsaturated monomers, etc. in the preparation of these polyols. Examples of these polyols, which may be prepared from fluorine-containing precursors and used in accordance with the present invention, are disclosed in U.S. Patent 4,701,480, the disclosure of which is herein incorporated by reference. Additional examples of suitable fluorine-containing compounds are disclosed in U.S. Patents 5,294,662 and 5,254,660, the disclosures of which are herein incorporated by reference.

Preferred for use according to the invention are compounds containing one or more hydroxyl groups, preferably one or two hydroxyl groups and more preferably one hydroxyl group; one or more fluoroalkyl groups; optionally one or more methylene groups; and optionally other hetero atoms such as ether groups. These compounds preferably have a molecular weight of less than 2000 or a hydroxyl number of greater than 28.

To prepare the polyisocyanates mixtures according to the invention the minimum ratio of fluorine-containing compounds to polyisocyanate adduct is about 0.01 millimoles, preferably about 0.1 millimoles and more preferably about 1 millimole of fluorine-containing compounds for each mole of polyisocyanates adduct. The maximum amount of fluorine-containing compounds to polyisocyanate adduct is about 500 millimoles, preferably about 100 millimoles and more preferably about 20 millimoles of fluorine-containing compounds for each mole of polyisocyanate adduct. The amount of fluorine is selected such that the resulting polyisocyanate mixture contains a minimum of 0.001 % by weight, preferably 0.01 % by weight and more preferably 0.1 % by weight, of fluorine (calculated as F, AW 19), based on solids, and a maximum of 50% by weight, preferably 10% by weight, more preferably 7% by weight and most preferably 3% by weight of fluorine, based on solids.

Suitable methods for preparing the polyisocyanate mixtures containing allophanate groups are known and described in U.S. Patents 3,769,318, 4,160,080 and 4,177,342 and 4,738,991, the disclosures of which are herein incorporated by reference. The allophanatization reaction may be conducted at a temperature of 50 to 250°C, preferably 60 to 150°C and more preferably 70 to 120°C. The reaction may be terminated by reducing the reaction temperature, by removing the catalyst, e.g., by applying a vacuum, or by the addition of a catalyst poison. After the reaction is terminated, there is no need to remove unreacted monomeric diisocyanates, e.g., by thin film evaporation, because polyisocyanate adducts having low monomeric diisocyanate contents are used as the starting material.

The allophanatization reaction may be carried out in the absence or in the presence of solvents which are inert to isocyanate groups, preferably in the absence of solvents, especially when liquid starting materials are used. Depending on the area of application of the products according to the invention, low to medium-boiling solvents or high-boiling solvents can be used. Suitable solvents include esters such as ethyl acetate or butyl acetate; ketones such as acetone or butanone; aromatic compounds such as toluene or xylene; halogenated hydrocarbons such as methylene chloride and trichloroethylene; ethers such as diisopropylether; and alkanes such as cyclohexane, petroleum ether or ligroin.

The process according to the invention may take place either batchwise or continuously, for example, as described below. The starting polyisocyanate adduct is introduced with the exclusion of moisture and optionally with an inert gas into a suitable stirred vessel or tube and optionally mixed with a solvent which is inert to isocyanate groups such as toluene, butyl acetate, diisopropylether or cyclohexane. The previously described compounds containing fluorine and hydroxyl groups may be introduced into the reaction vessel in accordance with several embodiments. They may be prereacted with the starting polyisocyanate adduct to form urethane and prior to introducing the polyisocyanate adducts into the reaction vessel; they may be mixed with the polyisocyanate adducts and introduced into the reaction vessel; they may be separately added to the reaction vessel either before or after, preferably after, the polyisocyanate adducts are added; or the catalyst may be dissolved in these compounds prior to introducing the solution into the reaction vessel.

The progress of the reaction is followed by determining the NCO content by a suitable method such as titration, refractive index or IR analysis. Thus, the reaction may be terminated at the desired degree of allophanatization. The termination of the allophanatization reaction can take place, for example, after the NCO content has fallen by 5 to 80% by weight, preferably 10 to 60% by weight and more preferably 20 to 50% by weight, based on the initial isocyanate group content of the polyisocyanate adduct starting material.

The polyisocyanate mixtures obtained in accordance with the present invention have an average functionality of about 2 to 7, preferably 2 to 4; an NCO content of 10 to 35% by weight, preferably 10 to 30% by weight and more preferably 15 to 30% by weight; and a monomeric diisocyanate content of less than 3% by weight, preferably less than 2% by weight and more preferably less than 1% by weight. The polyisocyanate mixtures have an allophanate group content (calculated as N₂,C₂,H,O₃, MW 101) of preferably at least 0.001 % by weight, more preferably at least 0.01% by weight and most preferably at least 0.5% by weight. The upper limit for the allophanate group content is preferably 20%, preferably 10% by weight and most preferably 5% by weight. The preceding percentages are based on the solids content of the polyisocyanate mixtures.

The products according to the present invention are polyisocyanate mixtures containing allophanate groups and fluorine. The products may also contain residual urethane groups which are not converted to allophanate groups depending upon the temperature maintained during the reaction and the degree of isocyanate group consumption. While it is preferred to convert at least 50%, more preferably at least 70% and most preferably at least 90% of the urethane groups formed from the fluorine-containing hydroxyl compounds to allophanate groups, it is not necessary provided that the number of equivalents of allophanate groups exceeds the number of equivalents of urethane groups. Preferably, the polyisocyanate mixture contains sufficient allophanate groups to ensure that the polyisocyanate mixture remains stable and homogeneous in storage for 1 month at 25°C, more preferably for 3 months at 25°C. If the polyisocyanate mixture contains an insufficient number of allophanate groups, the mixture may be cloudy and a gradual settling of insoluble constituents may take place during storage.

The products according to the invention are valuable starting materials for the production of polyisocyanate polyaddition products by reaction with compounds containing at least two isocyanate reactive groups. The products according to the invention may also be moisture-cured to form coatings. Preferred products are one or two-component coating compositions, more preferably polyurethane coating compositions. When the polyisocyanates are unblocked, two-component compositions are obtained. To the contrary when the polyisocyanates are blocked, one-component compositions are obtained.

Prior to their use in coating compositions, the polyisocyanate mixtures according to the invention may be blended with other known polyisocyanates, e.g., polyisocyanate adducts containing biuret, isocyanurate, allophanate, urethane, urea, carbodiimide, and/or uretdione groups. The amount of the polyisocyanates mixtures according to the invention that must be blended with these other polyisocyanates is dependent upon the fluorine content of the polyisocyanate mixtures according to the invention, the intended application of the resulting coating compositions and the amount of low surface energy properties which are desired for this application.

To obtain low surface energy properties the resulting polyisocyanate blends should contain a minimum of 0.001 % by weight, preferably 0.01 % by weight and more preferably 0.1 % by weight, of fluorine (AW 19), based on solids, and a maximum of 10% by weight, preferably 7% by weight and more preferably 3% by weight of fluorine (AW 19), based on solids. While fluorine contents of greater that 10% by weight are also suitable for providing low surface energy coatings, there are no further improvements to be obtained by using higher quantities. By knowing the fluorine content of the polyisocyanate mixtures according to the invention and the desired fluorine content of the resulting polyisocyanate blends, the relative amounts of the polyisocyanate mixtures and the other polyisocyanates may be readily determined.

In accordance with the present invention any of the polyisocyanate mixtures according to the invention can be blended with other polyisocyanates, provided that the resulting blends have the minimum fluorine content required for the polyisocyanate mixtures of the present invention. However, the polyisocyanate mixtures to be blended preferably have a minimum fluorine content of 5% by weight, more preferably 10% by weight, and preferably have a maximum fluorine content of 50% by weight, more preferably 40% by weight and most preferably 30% by weight. These so-called "concentrates" may then be blended with other polyisocyanates to form polyisocyanate blends that may be used to prepare coatings having low surface energy characteristics.

Several advantages are obtained by preparing concentrates with high fluorine contents and subsequently blending them with non-fluorine-containing polyisocyanates. Initially, it is possible to convert many products to low surface energy polyisocyanates while only producing one concentrate. By forming such low surface energy polyisocyanates by blending commercially available polyisocyanates with concentrates, it is not necessary to separately prepare each of the products in both a fluorine-containing and a non-fluorine-containing form. One possible disadvantage of the highest fluorine contents is that all of the isocyanate groups of a small portion of the starting polyisocyanate adducts may be reacted. These molecules that do not contain isocyanate groups cannot react into the resulting coating and, thus, may adversely affect the properties of the final coating.

Preferred reaction partners for the products according to the invention are the polyhydroxy polyesters, polyhydroxy polyethers, polyhydroxy polyacrylates, polyhydroxy polylactones, polyhydroxy polyurethanes, polyhydroxy polyepoxides and optionally low molecular weight, polyhydric alcohols known from polyurethane coatings technology. Polyamines, particularly in blocked form, for example as polyketimines, oxazolidines or polyaldimines are also suitable reaction partners for the products according to the invention. Also suitable are polyaspartic acid derivatives (aspartates) containing secondary amino groups, which also function as reactive diluents.

To prepare the coating compositions the amount of the polyisocyanate component and the isocyanate reactive component are selected to provide equivalent ratios of isocyanate groups (whether present in blocked or unblocked form) to isocyanate-reactive groups of about 0.8 to 3, preferably about 0.9 to 1.5. The coating compositions may be cured either at ambient temperature or at elevated temperature.

To accelerate hardening, the coating compositions may contain known polyurethane catalysts, e.g., tertiary amines such as triethylamine, pyridine, methyl pyridine, benzyl dimethylamine, N,N-dimethylamino cyclohexane, N-methyl-piperidine, pentamethyl diethylene triamine, 1,4-diazabicyclo[2,2,2]-octane and N,N'-dimethyl piperazine; or metal salts such as iron(III)-chloride, zinc chloride, zinc-2-ethyl caproate, tin(II)-ethyl caproate, dibutyltin(IV)-dilaurate and molybdenum glycolate.

The products according to the invention are also valuable starting materials for one-component coating compositions, preferably polyurethane coating compositions, in which the isocyanate groups are used in a form blocked by known blocking agents. The blocking reaction is carried out in known manner by reacting the isocyanate groups with suitable blocking agents, preferably at an elevated temperature (e.g. about 40 to 160°C), and optionally in the presence of a suitable catalyst, for example, the previously described tertiary amines or metal salts.

Suitable blocking agents include monophenols such as phenol, the cresols, the trimethylphenols and the tert. butyl phenols; tertiary alcohols such as tert. butanol, tert. amyl alcohol and dimethylphenyl carbinol; compounds which easily form enols such as acetoacetic ester, acetyl acetone and malonic acid derivatives, e.g. malonic acid diethylester; secondary aromatic amines such as N-methyl aniline, the N-methyl toluidine, N-phenyl toluidine and N-phenyl xylidine; imides such as succinimide; lactams such as ε-caprolactam and δ-valerolactam; pyrazoles such as 3,5-dimethyl pyrazole; oximes such as butanone oxime, methyl amyl ketoxime and cyclohexanone oxime; mercaptans such as methyl mercaptan, ethyl mercaptan, butyl mercaptan, 2-mercaptobenzthiazole, α-naphthyl mercaptan and dodecyl mercaptan; and triazoles such as 1H-1,2,4-triazole.

The polyisocyanate mixtures according to the invention may also be used as the polyisocyanate component in two-component water borne coating compositions. To be useful in these compositions the polyisocyanate mixtures may be rendered hydrophilic either by blending with external emulsifiers or by a reaction with compounds containing cationic, anionic or non-ionic groups. The reaction with the hydrophilic compound may be carried out either before, during or after the allophanatization reaction to incorporate the fluorine-containing compound. Methods for rendering the polyisocyanates hydrophilic are disclosed in copending application, U.S. Patents 5,194,487 and 5,200,489, the disclosures of which are herein incorporated by reference. The reduced surface tensions of the modified polyisocyanate mixtures enhance pigment dispersion and substrate wetting.

The coating compositions may also contain other additives such as pigments, dyes, fillers, levelling agents and solvents. The coating compositions may be applied to the substrate to be coated in solution or from the melt by conventional methods such as painting, rolling, pouring or spraying.

The coating compositions containing the polyisocyanate mixtures according to the invention provide coatings which have good dry times, adhere surprisingly well to a metallic base, and are particularly light-fast, color-stable in the presence of heat and very resistant to abrasion. They are also characterized by high hardness, elasticity, very good resistance to chemicals, high gloss, good weather resistance, good environmental etch resistance and good pigmenting qualities. Above all, the coating compositions have an excellent surface appearance and excellent cleanability.

The invention is further illustrated, but is not intended to be limited by the following examples in which all parts and percentages are by weight unless otherwise specified.

### EXAMPLES

In the examples the allophanate group contents are based on the theoretical content assuming 100% conversion of the urethane groups to allophanate groups.

### Fluorinated Alcohol BA-L

A fluorinated alcohol having a molecular weight of 443 (available from DuPont as Zonyl BA-L) and corresponding to the general formula

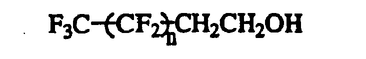

### Fluorinated Alcohol D10

A fluorinated diol having a molecular weight of about 1000 (available from Solvay Solexis as Fluorolink D10) and corresponding to the general formula

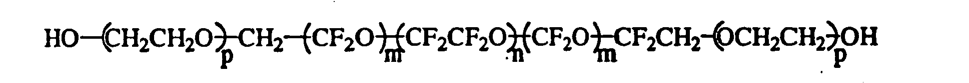

### Polyisocyanate 3400

An uretdione and isocyanurate group-containing polyisocyanate prepared from 1,6-hexamethylene diisocyanate and having an isocyanate content of 21.5%, a content of monomeric diisocyanate of <0.50%, a viscosity at 25°C of 200 mPa.s and a surface tension of 40 dynes/cm (available from Bayer Material Science as Desmodur N 3400).

### Polyisocyanate 3600

An isocyanurate group-containing polyisocyanate prepared from 1,6-hexamethylene diisocyanate and having an isocyanate content of 22.8%, a content of monomeric diisocyanate of <0.25%, a viscosity at 25°C of 1145 mPa.s and a surface tension of 45 dynes/cm (available from Bayer Material Science as Desmodur N 3600).

### Polyisocyanate 2410

An isocyanurate and iminooxadiazine dione group-containing polyisocyanate prepared from 1,6-hexamethylene diisocyanate and having an isocyanate content of 23 6% a content of monomeric diisocyanate of <0.30%, a viscosity at 25°C of 640 mPa.s and a surface tension of 40 dynes/cm (available from Bayer Material Science as Desmodur XP 2410).

### Polyisocyanate 4470

An isocyanurate group-containing polyisocyanate prepared from isophorone diisocyanate, and having an isocyanate content of 11.9%, a content of monomeric diisocyanate of <0.50%, a viscosity at 25°C of 670 mPa.s and a surface tension of 40 dynes/cm as a 70% solution in n-butyl acetate (available from Bayer Material Science as Desmodur Z 4470 BA).

### Polyisocyanate 3200

A biuret group-containing polyisocyanate prepared from 1,6-hexamethylene diisocyanate and having an isocyanate content of 23%, a content of monomeric diisocyanate of <0.70%, a viscosity at 25°C of 1750 mPa.s and a surface tension of 47 dynes/cm (available from Bayer Material Science as Desmodur N 3200).

### Surface tension of liquid samples

The Wilhelmy plate technique (flamed glass slides) was used to determine surface tension. Samples were analyzed with a Cahn DCA 312 dynamic contact angle analyzer. All samples were stirred prior to analysis.

### Surface energy of film samples

Advancing angles of water and methylene iodide, polar and nonpolar solvents respectively, were measured using a Rame-Hart goniometer. Total solid surface energies, including the polar and dispersive components, were calculated using the advancing angles according to the Owens Wendt procedure.

### Example 1 - Preparation of Polyisocyanate Mixture 1

346.5 g (1.89 eq, based on actual titrated value) of Polyisocyanate 3600 and 3.5 g (0.008 eq) of Fluorinated Alcohol BA-L were charged to a 500 ml, 3-neck round bottom flask equipped with mechanical stirring, a cold water condenser, heating mantle, and N₂ inlet. As the reaction was stirred and heated to 110°C, a total of 0.06 g of stannous octoate were charged to the mixture. After cooking for 5 hours at 110°C, the NCO content reached the theoretical value of 22.56%; the heat was removed and a cold water/ice bath was applied. The viscosity was 1193 mPa.s @ 25°C and the surface energy of the liquid was 29.3 dynes/cm.

### Examples 2-10 - Preparation of Polyisocyanate Mixtures 2-9

Other polyisocyanate mixtures were prepared in a similar fashion to Example 1 using different polyisocyanates and different types and amounts of fluorinated alcohols. Isobutanol was used in a comparison example to show that the fluorinated alcohols are needed to provide low surface energy. Comparison Examples 4 and 5 use the same equivalents of alcohol as Examples 1 and 2, respectively. The details of Examples 1-9 are set forth in Table 1.

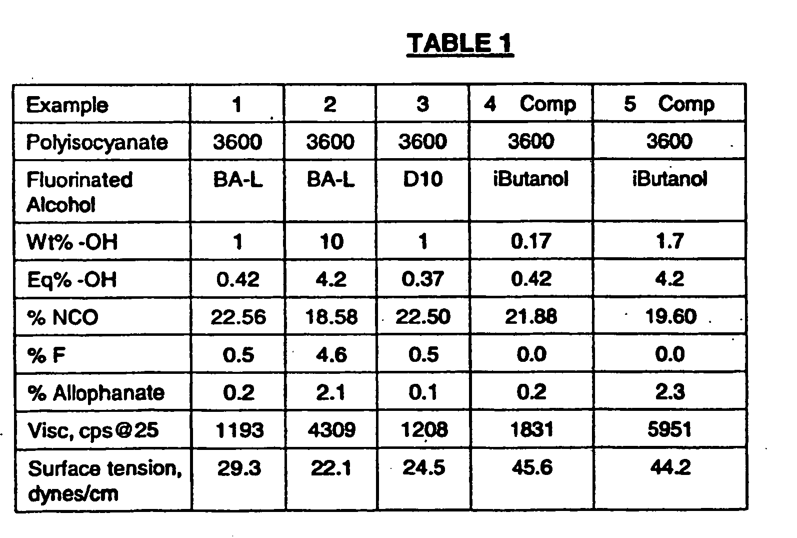

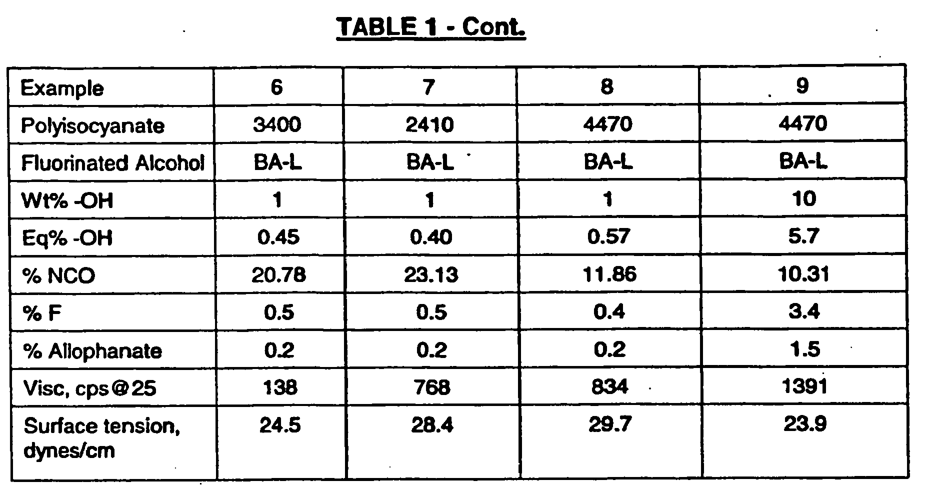

### Examples 10-13 - Preparation of moisture cure coatings

Moisture cure coatings were prepared by diluting the polyisocyanate mixtures set forth in Table 2 with ethyl acetate until a viscosity of approximately 200 mPa.s was obtained and then adding 1 weight percent of dibutyl tin dilaurate, based on solids. Coatings were drawn down on unpolished cold roll steel panels using an 8 mil drawdown bar. The coatings were cured overnight on the laboratory bench top under ambient conditions. The details of Examples 10-13 are set forth in Table 2.

**TABLE 2**

| Example | 10 | 11 | 12 (Comp) | 13 (Comp) |
|---|---|---|---|---|
| Polyisocyanate Mixture from Example | 1 | 2 | 4 | 5 |
| % F of Polyisocyanate Mixture | 0.5 | 4.6 | 0.0 | 0.0 |
| % Allophanate of Polyisocyanate Mixture | 0.2 | 2.1 | 0.2 | 2.3 |
| Polyisocyanate Mixture, g | 6 | 6 | 6 | 6 |
| Solvent, g | 0.7 | 1.5 | 0.7 | 1.5 |
| Catalyst, g | 0.06 | 0.06 | 0.06 | 0.06 |
| Surface energy, dynes/cm | 11.0 | 12.1 | 40.1 | 40.2 |

### Examples 14-17 - Preparation of Two-Component Coating Compositions

Two-component coating compositions were prepared by mixing the polyisocyanate mixtures set forth in Table 3 with a trifunctional polyester polyol (Desmophen 670A-80, available from Bayer MaterialScience LLC), at an NCO:OH equivalent ratio of 1.05:1.00 and adding 0.05 g of dibutyl tin dilaurate per hundred parts of polyisocyanate/polyol blend. An 8 mil drawdown bar was used to draw coatings on unpolished cold roll steel panels. The coatings were cured overnight on the laboratory bench top under ambient conditions. The details of Examples 15-18 are set forth in Table 3.

**TABLE 3**

| Example | 14 | 15 | 16 (Comp) | 17 (Comp) |
|---|---|---|---|---|
| Polyisocyanate Mixture from Example | 1 | 2 | 4 | 5 |
| % F of Polyisocyanates Mixture | 0.5 | 4.6 | 0.0 | 0.0 |
| % Allophanate of Polyisocyanate Mixture | 0.2 | 2.1 | 0.2 | 2.3 |
| Polyisocyanate Mixture, g | 5 | 5 | 5 | 5 |
| Polyol, g | 12.78 | 10.53 | 12.40 | 11.11 |
| Catalyst, g | 0.01 | 0.01 | 0.01 | 0.01 |
| Surface energy, dynes/cm | 11.5 | 9.6 | 30.9 | 28.1 |

### Examples 18-24 - Use of Polyisocyanate Mixtures as Concentrates

1 g of the polyisocyanate mixtures from Examples 1, 2, 4, 5 and 9 were mixed by hand with 9 g of the unmodified polyisocyanates set forth in Table 4. This resulting polyisocyanate mixtures possessed a low surface tension value, which indicates that the polyisocyanate mixtures according to the invention could be used as concentrates for diluting unmodified polyisocyanates. The details of Examples 18-24 are forth in Table 4.

**TABLE 4**

| Example | 18 | 19 | 20 | 21 | 22 | 23 | 24 |
|---|---|---|---|---|---|---|---|
| | | | | | Comp | | Comp |
| Polyisocyanate Mixture from Example | 2 | 2 | 2 | 9 | 5 | 1 | 4 |
| Weight, g | 1 | 1 | 1 | 1 | 1 | 1 | 1 |
| Unmodified Polyisocyanate | 3600 | 3200 | 3400 | 4470 | 3600 | 3600 | 3600 |
| Weight, g | 9 | 9 | 9 | 9 | 9 | 9 | 9 |
| % F of Blend | 0.5 | 0.5 | 0.5 | 0.3 | 0.0 | 0.5 | 0.0 |
| Allophanate of Blend | 0.2 | 0.2 | 0.2 | 0.2 | 0.2 | 0.02 | 0.02 |
| surface tension, dynes/cm | 26 | 24 | 24 | 28 | 45 | 28 | 45 |

This data shows that the Polyisocyanate Mixtures from Examples 1, 2 and 9 can be diluted with unmodified polyisocyanates, which did not contain fluorine, and still provide low surface tension. Dilution of the polyisocyanates from Comparison Examples 4 and 5 with the same unmodified polyisocyanates did not change the high surface tension.

### Examples 25-30 - Preparation of moisture cure coatings

Moisture cure coatings were prepared by diluting the Polyisocyanate Mixtures set forth in Table 5 with ethyl acetate until a viscosity of approximately 200 mPa.s was obtained and then adding 1 weight percent of dibutyl tin dilaurate, based on solids. Coatings were drawn down on unpolished cold roll steel panels using an 8 mil drawdown bar. The coatings were cured overnight on the laboratory bench top under ambient conditions. The details of Examples 25-30 are set forth in Table 5.

**TABLE 5**

| Example | 25 | 26 comp | 27 | 28 comp | 29 | 30 comp |
|---|---|---|---|---|---|---|
| Polyisocyanate Mixture from Example | 2 | 5 | 1 | 4 | 18 | 22 |
| % F of Polyisocyanate Mixture | 4.6 | 0.0 | 0.5 | 0.0 | 0.5 | 0.5 |
| % Allophanate of Polyisocyanate Mixture | 2.1 | 2.3 | 0.2 | 02 | 0.2 | 0.2 |
| Polyisocyanate Mixture, g | 6 | 6 | 6 | 6 | 6 | 6 |
| Solvent, g | 1.5 | 1.5 | 0.7 | 0.7 | 0.7 | 0.7 |
| Catalyst, g | 0.06 | 0.06 | 0.06 | 0.06 | 0.06 | 0.06 |
| Surface energy, dynes/cm | 12 | 40 | 11 | 40 | 14 | 42 |

This data shows that moisture cure coatings made from polyisocyanate mixtures, which were prepared from concentrates, had the same low surface energy as coatings made from polyisocyanate mixtures, which were directly made with the same amounts of fluorine. Coatings prepared from the comparison polyisocyanates had high surface energies.

### Examples 31-36 - Preparation of Two-Component Coating Compositions

Two-component coating compositions were prepared by mixing the polyisocyanate mixtures set forth in Table 3 with a trifunctional polyester polyol (Desmophen 670A-80, available from Bayer MaterialScience LLC), at an NCO:OH equivalent ratio of 1.05:1.00 and adding 0.05 g of dibutyl tin dilaurate per hundred parts of polyisocyanate/polyol blend. An 8 mil drawdown bar was used to draw coatings on unpolished cold roll steel panels. The coatings were cured overnight on the laboratory bench top under ambient conditions. The details of Examples 31-36 are set forth in Table 6.

**TABLE 6**

| Example | 31 | 32 comp | 33 | 34 comp | 35 | 36 comp |
|---|---|---|---|---|---|---|
| Polyisocyanate Mixture from Example | 2 | 5 | 1 | 4 | 18 | 22 |
| % F of Polyisocyanate Mixture | 4.6 | 0.0 | 0.5 | 0.0 | 0.5 | 0.5 |
| % Allophanate of Polyisocyanate Mixture | 2.1 | 2.3 | 0.2 | 0.2 | 0.2 | 0.2 |
| Polyisocyanate Mixture, g | 5 | 5 | 5 | 5 | 5 | 5 |
| Catalyst, g | 0.01 | 0.01 | 0.01 | 0.01 | 0.01 | 0.01 |
| Surface energy, dynes/cm | 10 | 28 | 12 | 31 | 12 | 33 |

This data shows that coatings made from two-component coating compositions containing polyisocyanate mixtures, which were prepared from concentrates, had the same low surface energy as coatings made from two-component coating compositions containing polyisocyanate mixtures, which were directly made with the same amounts of fluorine. Coatings prepared from the comparison polyisocyanates had high surface energies.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A polyisocyanate mixture
i) having an NCO content of 5 to 35% by weight and a monomeric diisocyanate content of less than 3% by weight, and prepared from a polyisocyanate adduct, which contains isocyanurate, uretdione, biuret, urethane, allophanate, iminooxadiazinedione, carbodiimide, acylurea and/or oxadiazinetrione groups,
ii) containing allophanate groups in an amount such that there are more equivalents of allophanate groups than urethane groups and
iii) containing fluorine (calculated as F, AW 19) in an amount of 0.001 to 50% by weight,
wherein the preceding percentages are based on the solids content of the polyisocyanate mixture and wherein the polyisocyanate mixture is prepared by
a) reacting a portion of the isocyanate groups of the polyisocyanate adduct with 0.01 to 500 millimoles, per mole of polyisocyanate adduct, of a compound containing two or more carbon atoms, one or more hydroxyl groups and one or more fluorine atoms to form urethane groups,
b) adding an allophanatization catalyst prior to, during or after step a),
c) converting a sufficient amount of the urethane groups formed in step a) to allophanate groups to satisfy the requirements of ii) and
d) terminating the allophanatization reaction at the desired NCO content by adding a catalyst poison and/or by thermally deactivating the catalyst and recovering the polyisocyanate mixture without removing monomeric diisocyanates.

2. The polyisocyanate mixture of Claim 1 wherein fluorine is incorporated by reacting an isocyanate group with a compound containing two or more carbon atoms, one hydroxyl group and one or more fluorine atoms.

3. The polyisocyanate mixture of Claim 1 wherein said polyisocyanate adduct comprises an isocyanurate group-containing polyisocyanate prepared from 1,6-hexamethylene diisocyanate or isophorone diisocyanate.

4. The polyisocyanate mixture of Claim 2 wherein said polyisocyanate adduct comprises an isocyanurate group-containing polyisocyanate prepared from 1,6-hexamethylene diisocyanate or isophorone diisocyanate.

5. The polyisocyanate mixture of Claim 1 wherein the polyisocyanate mixture contains 0.1 to 10% by weight, based on solids, of fluorine.

6. The polyisocyanate mixture of Claim 2 wherein the polyisocyanate mixture contains 0.1 to 10% by weight, based on solids, of fluorine.

7. The polyisocyanate mixture of Claim 3 wherein the polyisocyanate mixture contains 0.1 to 10% by weight, based on solids, of fluorine.

8. The polyisocyanate mixture of Claim 4 wherein the polyisocyanate mixture contains 0.1 to 10% by weight, based on solids, of fluorine.

9. The polyisocyanate mixture of Claim 1 wherein the polyisocyanate mixture contains 10 to 40% by weight, based on solids, of fluorine.

10. The polyisocyanate mixture of Claim 2 wherein the polyisocyanate mixture contains 10 to 40% by weight, based on solids, of fluorine.

11. The polyisocyanate mixture of Claim 3 wherein the polyisocyanate mixture contains 10 to 40% by weight, based on solids, of fluorine.

12. The polyisocyanate mixture of Claim 4 wherein the polyisocyanate mixture contains 10 to 40% by weight, based on solids, of fluorine.

13. A process for the production of a polyisocyanate mixture
i) having an NCO content of 5 to 35% by weight and a monomeric diisocyanate content of less than 3% by weight, and prepared from a polyisocyanate adduct, which contains isocyanurate, uretdione, biuret, urethane, allophanate, iminooxadiazinedione, carbodiimide, acylurea and/or oxadiazinetrione groups,
ii) containing allophanate groups in an amount such that there are more equivalents of allophanate groups than urethane groups and
iii) containing fluorine (calculated as F, AW 19) in an amount of 0.001 to 50% by weight,
wherein the preceding percentages are based on the solids content of the polyisocyanate mixture,
which comprises
a) reacting a portion of the isocyanate groups of the polyisocyanate adduct with 0.01 to 500 millimoles, per mole of polyisocyanate adduct, of a compound containing two or more carbon atoms, one or more hydroxyl groups and one or more fluorine atoms to form urethane groups,
b) adding an allophanatization catalyst prior to, during or after step a),
c) converting a sufficient amount of the urethane groups formed in step a) to allophanate groups to satisfy the requirements of ii) and
d) terminating the allophanatization reaction at the desired NCO content by adding a catalyst poison and/or by thermally deactivating the catalyst and recovering the polyisocyanate mixture without removing monomeric diisocyanates.

14. The process of Claim 13 wherein fluorine is incorporated by reacting an isocyanate group with a compound containing one hydroxyl group directly attached to a carbon atom and one or more fluorine atoms.

15. The process of Claim 13 wherein said polyisocyanate adduct comprises an isocyanurate group-containing polyisocyanate prepared from 1,6-hexamethylene diisocyanate or isophorone diisocyanate.

16. The process of Claim 14 wherein said polyisocyanate adduct comprises an isocyanurate group-containing polyisocyanate prepared from 1,6-hexamethylene diisocyanate or isophorone diisocyanate.

17. A one- or two-component coating composition containing the polyisocyanate mixture of Claim 1, optionally blocked by blocking agents for isocyanate groups, and optionally a compound containing isocyanate-reactive groups.

## Patentansprüche

1. Polyisocyanatmischung,
i) die einen NCO-Gehalt von 5 bis 35 Gewichts-% und einen Gehalt an monomerem Diisocyanat von weniger als 3 Gewichts-% aufweist und aus einem Polyisocyanat-Addukt hergestellt ist, das Isocyanurat-, Uretdion-, Biuret-, Urethan-, Allophanat-, Iminooxadiazindion-, Carbodiimid-, Acylharnstoff- und/oder Oxadiazintriongruppen enthält,
ii) die Allophanatgruppen in einer solchen Menge enthält, dass mehr Äquivalente an Allophanatgruppen als an Urethangruppen vorhanden sind, und
iii) die Fluor (berechnet als F, AW 19) in einer Menge von 0,001 bis 50 Gewichts-% enthält,
wobei sich die vorstehend genannten Prozentangaben auf den Feststoffgehalt der Polyisocyanatmischung beziehen und wobei die Polyisocyanatmischung hergestellt ist durch:
a) Umsetzen eines Teils der Isocyanatgruppen des Polyisocyanat-Addukts mit 0,01 bis 500 Millimol, pro Mol des Polyisocyanat-Addukts, einer Verbindung, die zwei oder mehr Kohlenstoffatome, eine oder mehrere Hydroxylgruppen und eines oder mehrere Fluoratome enthält, um Urethangruppen zu bilden,
b) Zusetzen eines Allophanatisierungskatalysators vor, während oder nach Schritt a),
c) Umwandeln einer ausreichenden Menge der in Schritt a) gebildeten Urethangruppen zu Allophanatgruppen, um die Anforderungen von ii) zu erfüllen, und
d) Beenden der Allophanatisierungsreaktion beim gewünschten NCO-Gehalt durch Zusetzen eines Katalysatorgifts und/oder durch thermisches Deaktivieren des Katalysators und Rückgewinnen der Polyisocyanatmischung ohne Entfernen der monomeren Diisocyanate.

2. Polyisocyanatmischung nach Anspruch 1, wobei Fluor durch Umsetzen einer Isocyanatgruppe mit einer Verbindung, die zwei oder mehr Kohlenstoffatome, eine Hydroxylgruppe und eines oder mehrere Fluoratome enthält, eingebracht wurde.

3. Polyisocyanatmischung nach Anspruch 1, wobei das Polyisocyanat-Addukt ein Isocyanuratgruppen enthaltendes Polyisocyanat aufweist, das aus 1,6-Hexamethylendiisocyanat oder Isophorondiisocyanat hergestellt ist.

4. Polyisocyanatmischung nach Anspruch 2, wobei das Polyisocyanat-Addukt ein Isocyanuratgruppen enthaltendes Polyisocyanat aufweist, das aus 1,6-Hexamethylendiisocyanat oder Isophorondiisocyanat hergestellt ist.

5. Polyisocyanatmischung nach Anspruch 1, wobei die Polyisocyanatmischung 0,1 bis 10 Gewichts-%, bezogen auf die Feststoffe, Fluor enthält.

6. Polyisocyanatmischung nach Anspruch 2, wobei die Polyisocyanatmischung 0,1 bis 10 Gewichts-%, bezogen auf die Feststoffe, Fluor enthält.

7. Polyisocyanatmischung nach Anspruch 3, wobei die Polyisocyanatmischung 0,1 bis 10 Gewichts-%, bezogen auf die Feststoffe, Fluor enthält.

8. Polyisocyanatmischung nach Anspruch 4, wobei die Polyisocyanatmischung 0,1 bis 10 Gewichts-%, bezogen auf die Feststoffe, Fluor enthält.

9. Polyisocyanatmischung nach Anspruch 1, wobei die Polyisocyanatmischung 10 bis 40 Gewichts-%, bezogen auf die Feststoffe, Fluor enthält.

10. Polyisocyanatmischung nach Anspruch 2, wobei die Polyisocyanatmischung 10 bis 40 Gewichts-%, bezogen auf die Feststoffe, Fluor enthält.

11. Polyisocyanatmischung nach Anspruch 3, wobei die Polyisocyanatmischung 10 bis 40 Gewichts-%, bezogen auf die Feststoffe, Fluor enthält.

12. Polyisocyanatmischung nach Anspruch 4, wobei die Polyisocyanatmischung 10 bis 40 Gewichts-%, bezogen auf die Feststoffe, Fluor enthält.

13. Verfahren zum Herstellen einer Polyisocyanatmischung,
i) die einen NCO-Gehalt von 5 bis 35 Gewichts-% und einen Gehalt an monomerem Diisocyanat von weniger als 3 Gewichts-% aufweist und aus einem Polyisocyanat-Addukt hergestellt ist, das Isocyanurat-, Uretdion-, Biuret-, Urethan-, Allophanat-, Iminooxadiazindion-, Carbodiimid-, Acylharnstoff- und/oder Oxadiazintriongruppen enthält,
ii) die Allophanatgruppen in einer solchen Menge enthält, dass mehr Äquivalente an Allophanatgruppen als an Urethangruppen vorhanden sind, und
iii) die Fluor (berechnet als F, AW 19) in einer Menge von 0,001 bis 50 Gewichts-% enthält,
wobei sich die vorstehend genannten Prozentangaben auf den Feststoffgehalt der Polyisocyanatmischung beziehen und wobei das Verfahren umfasst:
a) Umsetzen eines Teils der Isocyanatgruppen des Polyisocyanat-Addukts mit 0,01 bis 500 Millimol, pro Mol des Polyisocyanat-Addukts, einer Verbindung, die zwei oder mehr Kohlenstoffatome, eine oder mehrere Hydroxylgruppen und eines oder mehrere Fluoratome enthält, um Urethangruppen zu bilden,
b) Zusetzen eines Allophanatisierungskatalysators vor, während oder nach Schritt a),
c) Umwandeln einer ausreichenden Menge der in Schritt a) gebildeten Urethangruppen zu Allophanatgruppen, um die Anforderungen von ii) zu erfüllen, und
d) Beenden der Allophanatisierungsreaktion beim gewünschten NCO-Gehalt durch Zusetzen eines Katalysatorgifts und/oder durch thermisches Deaktivieren des Katalysators und Rückgewinnen der Polyisocyanatmischung ohne Entfernen der monomeren Diisocyanate.

14. Verfahren nach Anspruch 13, wobei Fluor durch Umsetzen einer Isocyanatgruppe mit einer Verbindung, die eine direkt an ein Kohlenstoffatom gebundene Hydroxylgruppe und eines oder mehrere Fluoratome enthält, eingebracht wird.

15. Verfahren nach Anspruch 13, wobei das Polyisocyanat-Addukt ein Isocyanuratgruppen enthaltendes Polyisocyanat aufweist, das aus 1,6-Hexamethylendiisocyanat oder Isophorondiisocyanat hergestellt ist.

16. Verfahren nach Anspruch 14, wobei das Polyisocyanat-Addukt ein Isocyanuratgruppen enthaltendes Polyisocyanat aufweist, das aus 1,6-Hexamethylendiisocyanat oder Isophorondiisocyanat hergestellt ist.

17. Ein- oder Zwei-Komponenten-Beschichtungszusammensetzung, enthaltend die Polyisocyanatmischung gemäß Anspruch 1, wahlweise geblockt durch Blockierungsmittel für Isocyanatgruppen und wahlweise mit einer Verbindung, die mit Isocyanat reagierende Gruppen enthält.

## Revendications

1. Mélange de polyisocyanate
i) ayant une teneur en NCO de 5 à 35 % en poids et une teneur en diisocyanate monomère inférieure à 3 % en poids, et préparé à partir d'un produit d'addition de polyisocyanate, qui contient des groupes isocyanurate, uretdione, biuret, uréthane, allophanate, iminooxadiazinedione, carbodiimide, acylurée et/ou oxadiazinetrione,
ii) contenant des groupes allophanate en une quantité telle qu'il y ait davantage d'équivalents de groupes allophanate que de groupes uréthane, et
iii) contenant du fluor (calculé en tant que F, AW 19) en une quantité de 0,001 à 50 % en poids,
les pourcentages précédents étant fondés sur la teneur en solides du mélange de polyisocyanate et le mélange de polyisocyanate étant préparé par
a) la mise en réaction d'une partie des groupes isocyanate du produit d'addition de polyisocyanate avec 0,01 à 500 millimoles, par mole de produit d'addition de polyisocyanate, d'un composé contenant deux atomes de carbone ou plus, un ou plusieurs groupes hydroxyle et un ou plusieurs atomes de fluor pour former des groupes uréthane,
b) l'ajout d'un catalyseur d'allophanatation avant, pendant ou après l'étape a),
c) la conversion d'une quantité suffisante des groupes uréthane formés à l'étape a) en groupes allophanate pour satisfaire les exigences de ii) et
d) la terminaison de la réaction d'allophanatation à la teneur en NCO souhaitée par ajout d'un poison catalytique et/ou par désactivation thermique du catalyseur et la récupération du mélange de polyisocyanate sans éliminer les diisocyanates monomères.

2. Mélange de polyisocyanate selon la revendication 1, dans lequel du fluor est incorporé par mise en réaction d'un groupe isocyanate avec un composé contenant deux atomes de carbone ou plus, un groupe hydroxyle et un ou plusieurs atomes de fluor.

3. Mélange de polyisocyanate selon la revendication 1, dans lequel ledit produit d'addition de polyisocyanate comprend un polyisocyanate contenant un groupe isocyanurate préparé à partir de diisocyanate de 1,6-hexaméthylène ou de diisocyanate d'isophorone.

4. Mélange de polyisocyanate selon la revendication 2, dans lequel ledit produit d'addition de polyisocyanate comprend un polyisocyanate contenant un groupe isocyanurate préparé à partir de diisocyanate de 1,6-hexaméthylène ou de diisocyanate d'isophorone.

5. Mélange de polyisocyanate selon la revendication 1, dans lequel le mélange de polyisocyanate contient 0,1 à 10 % en poids, par rapport aux solides, de fluor.

6. Mélange de polyisocyanate selon la revendication 2, dans lequel le mélange de polyisocyanate contient 0,1 à 10 % en poids, par rapport aux solides, de fluor.

7. Mélange de polyisocyanate selon la revendication 3, dans lequel le mélange de polyisocyanate contient 0,1 à 10 % en poids, par rapport aux solides, de fluor.

8. Mélange de polyisocyanate selon la revendication 4, dans lequel le mélange de polyisocyanate contient 0,1 à 10 % en poids, par rapport aux solides, de fluor.

9. Mélange de polyisocyanate selon la revendication 1, dans lequel le mélange de polyisocyanate contient 10 à 40 % en poids, par rapport aux solides, de fluor.

10. Mélange de polyisocyanate selon la revendication 2, dans lequel le mélange de polyisocyanate contient 10 à 40 % en poids, par rapport aux solides, de fluor.

11. Mélange de polyisocyanate selon la revendication 3, dans lequel le mélange de polyisocyanate contient 10 à 40 % en poids, par rapport aux solides, de fluor.

12. Mélange de polyisocyanate selon la revendication 4, dans lequel le mélange de polyisocyanate contient 10 à 40 % en poids, par rapport aux solides, de fluor.

13. Procédé de fabrication d'un mélange de polyisocyanate
i) ayant une teneur en NCO de 5 à 35 % en poids et une teneur en diisocyanate monomère inférieure à 3 % en poids, et préparé à partir d'un produit d'addition de polyisocyanate, qui contient des groupes isocyanurate, uretdione, biuret, uréthane, allophanate, iminooxadiazinedione, carbodiimide, acylurée et/ou oxadiazinetrione,
ii) contenant des groupes allophanate en une quantité telle qu'il y ait davantage d'équivalents de groupes allophanate que de groupes uréthane, et
iii) contenant du fluor (calculé en tant que F, AW 19) en une quantité de 0,001 à 50 % en poids,
les pourcentages précédents étant fondés sur la teneur en solides du mélange de polyisocyanate,
qui comprend
a) la mise en réaction d'une partie des groupes isocyanate du produit d'addition de polyisocyanate avec 0,01 à 500 millimoles, par mole de produit d'addition de polyisocyanate, d'un composé contenant deux atomes de carbone ou plus, un ou plusieurs groupes hydroxyle et un ou plusieurs atomes de fluor pour former des groupes uréthane,
b) l'ajout d'un catalyseur d'allophanatation avant, pendant ou après l'étape a),
c) la conversion d'une quantité suffisante des groupes uréthane formés à l'étape a) en groupes allophanate pour satisfaire les exigences de ii) et
d) la terminaison de la réaction d'allophanatation à la teneur en NCO souhaitée par ajout d'un poison catalytique et/ou par désactivation thermique du catalyseur et la récupération du mélange de polyisocyanate sans éliminer les diisocyanates monomères.

14. Procédé selon la revendication 13, dans lequel du fluor est incorporé par mise en réaction d'un groupe isocyanate avec un composé contenant un groupe hydroxyle directement attaché à un atome de carbone et un ou plusieurs atomes de fluor.

15. Procédé selon la revendication 13, dans lequel ledit produit d'addition de polyisocyanate comprend un polyisocyanate contenant un groupe isocyanurate préparé à partir de diisocyanate de 1,6-hexaméthylène ou de diisocyanate d'isophorone.

16. Procédé selon la revendication 14, dans lequel ledit produit d'addition de polyisocyanate comprend un polyisocyanate contenant un groupe isocyanurate préparé à partir de diisocyanate de 1,6-hexaméthylène ou de diisocyanate d'isophorone.

17. Composition de revêtement à un ou deux composants contenant le mélange de polyisocyanate selon la revendication 1, éventuellement bloqué par des agents de blocage pour groupes isocyanate, et éventuellement un composé contenant des groupes réactifs avec les isocyanates.
